# EUROPEAN PATENT APPLICATION

(11) **EP 1 443 240 A1**
(43) Date of publication of application: **04.08.2004**
(21) Application number: 04075237.0
(22) Date of filing: 23.01.2004
(51) Int. Cl.: F16F 13/26

(54) **Bi-state rate dip hydraulic mount**

(30) Priority: 31.01.2003 US 355894
(71) Applicant: Delphi Technologies, Inc., Troy, MI 48007 (US)
(72) Inventor: Tewani, Sanjiv Gobind, Lebanon, OH 45036 (US); Beer, Ronald Alan, Fairborn, OH 45324 (US); Hamberg, James Paul, Tipp City, OH 45371 (US)
(74) Representative: Denton, Michael John

(57) **Abstract**

A hydraulic mount 10 provides active control of dip rate performance through use of an orifice track 24 connecting a primary pumping chamber 14 of the mount 10 to a secondary fluid chamber 18 having a movable wall 20, and an actuator 26 for regulating pressure applied to the movable wall 20 for controlling movement of the movable wall 20. With little or no pressure applied to the movable wall 20, the mount 10 provides significant isolation and very little damping in a predetermined and designed frequency range. As pressure is applied to the movable wall 20 , the stiffness of the mount 10 is increased significantly, to thereby provide substantial damping.

## Description

### TECHNICAL FIELD OF THE INVENTION

This invention relates to resilient mounts of the type used in motor vehicles, and more particularly to resilient mounts using a hydraulic fluid.

### BACKGROUND OF THE INVENTION

It has long been the practice in motor vehicles, such as automobiles and trucks, to suspend engines and other heavy components that generate vibrations when operating on resilient mounts that isolate and damp the vibration from reaching the passenger compartment of the vehicle. It is desirable in such circumstances to provide a mount that is relatively soft for low amplitude higher frequency vibrations, such as those produced while an engine is operating at idle speed or at a constant speed while the vehicle is cruising along on a smooth road. Making the mount too soft, however, results in a structure that may not be capable of damping the motion of a heavy mass, such as the engine, when the vehicle is traveling over a bumpy road.

The competing requirements for a mount that is soft enough to isolate low amplitude vibrations generated by an engine at idle, and yet is robust enough to damp and limit the movement of an engine relative to the vehicle chassis when the vehicle is encountering a bumpy road surface, have caused the designers of resilient mounts to employ hydraulic fluid flowing between multiple chambers within the mount, together with judiciously sized orifice tracks and fluid valve arrangements providing fluid communication between the chambers, to provide mounts that exhibit different damping performance dependent upon the magnitude and frequency of the vibratory input to the mount, without any active external control of fluid flow between the various chambers. Such mounts are known as passive rate dip mounts.

Ideally, a rate dip mount would provide vibration isolation with almost no damping during idle or constant engine speed operation, so that the mount would transmit very little vibration from the engine to the vehicle chassis at idle or constant engine operation. An ideal mount would, however, provide significant damping for controlling engine bounce induced during events such as driving over a bump. These competing requirements for mount performance make designing a passive rate dip mount offering acceptable performance under all driving conditions a challenging task. As a result, compromises must be made which have resulted in prior rate dip mounts that do not provide optimum performance. In addition, prior mounts had to be designed for use in a given application, and could not be readily applied, or tuned, for use in other applications or under operating conditions other than those used in designing the mount.

What is needed, therefore, is an improved hydraulic rate dip mount, offering better overall performance than prior mounts. It is also desirable that the improved mount incorporate features which allow the operating characteristics of the mount to be tuned for use in multiple applications and adjusted to match changing driving conditions.

### SUMMARY OF THE INVENTION

Our invention provides an improved hydraulic mount through use of an orifice track connecting a primary pumping chamber of the mount to a secondary fluid chamber having a movable wall, and an actuator for regulating pressure applied to the movable wall to control movement of the movable wall. With little or no pressure applied to the movable wall, the mount provides significant isolation and very little damping. As pressure is applied to the movable wall, the stiffness of the mount is increased significantly, to thereby provide substantial damping.

In one form of our invention, a hydraulic mount includes a resilient hollow body and an actuator. The resilient hollow body defines a primary fluid chamber and a secondary fluid chamber, separated by a partition, and connected in fluid communication by an orifice track passing through the partition. The secondary fluid chamber includes a movable wall thereof having an inner and an outer surface with the inner surface of the movable wall being in fluid communication with the secondary fluid chamber. The actuator regulates pressure acting against the outer surface of the movable wall.

The resilient hollow body may further define a pressure regulating chamber separated from the secondary fluid chamber by the movable wall and having a pressure regulating orifice passing into the pressure regulating chamber. The pressure regulating chamber is separated from the secondary fluid chamber by the movable wall and is partially bounded by the outer surface of the movable wall. The actuator regulates fluid flow through the pressure regulating orifice.

The mount may further include a fluid reservoir, separate from the primary, secondary, and pressure regulating fluid chambers, and a first orifice track providing fluid communication between the primary fluid chamber and the reservoir. In this form of our invention, the orifice track between the primary fluid chamber and the secondary fluid chamber defines a second orifice track of the mount.

Our invention may also take the form of a method for operating a hydraulic mount having a resilient hollow body defining a primary fluid chamber, a reservoir, a secondary chamber having a movable wall, a first orifice track providing fluid communication between the primary chamber and the reservoir, and a second orifice track providing fluid communication between the primary chamber and the secondary chamber, by regulating pressure acting against the movable wall from outside of the secondary chamber, to thereby control stiffness and damping characteristics of the mount. Where the resilient hollow body further defines a pressure regulating chamber separated from the secondary
fluid camber by the movable wall for containing a fluid within the pressure regulating chamber, a method according to our invention may further include regulating the pressure of a fluid contained in the pressure regulating chamber.

The foregoing and other features and advantages of our invention are apparent from the following detailed description of exemplary embodiments, read in conjunction with the accompanying drawings. The detailed description and drawings are merely illustrative of the invention rather than limiting, the scope of the invention being defined by the appended claims and equivalents thereof.

### BRIEF DESCRIPTION OF THE DRAWINGS

FIG. 1 is a cross section, showing a first exemplary embodiment of a hydraulic mount, according to our invention; and
FIG. 2 is a cross section, showing a second exemplary embodiment of a hydraulic mount according to our invention.

### DETAILED DESCRIPTION

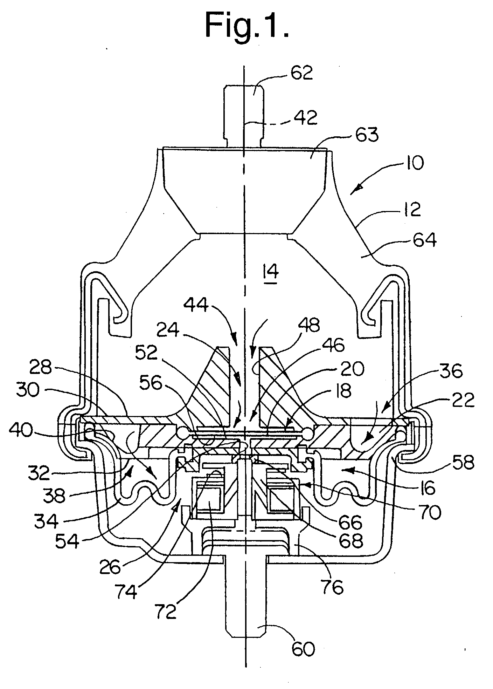

FIG. 1 illustrates an exemplary embodiment of a hydraulic mount 10, according to our invention. The hydraulic mount 10 includes a resilient hollow body 12 defining a primary fluid chamber 14, a reservoir 16, and a secondary chamber 18 having a movable wall in the form of a flexible diaphragm 20. A first orifice track 22 provides fluid communication between the primary fluid chamber 14 and the reservoir 16. A second orifice track 24 provides fluid communication between the primary chamber 14 and the secondary chamber 18. An actuator 26 regulates pressure acting against the movable wall 20, from outside of the secondary chamber 18, for regulating stiffness of the mount 10, in a manner described in more detail below.

The resilient hollow body 12 of the mount 10 includes a partition 28 formed by an upper partition plate 30 and a lower partition plate 32. The upper and lower partition plates 30, 32 have complimentary shaped elements on faying surfaces thereof, that form the first orifice track 22, and the secondary fluid chamber 18, when the upper and lower partition plates 30, 32 are joined together. The partition plate 28 also separates the primary fluid chamber 14 from the reservoir 16. The reservoir 16 is also partially defined by a second movable wall, in the form of a second flexible diaphragm 34 attached to, and extending from, the partition 28.

The first track 22 includes an inlet 36 opening in to the primary fluid chamber 14, and an outlet 38 opening into the reservoir 16, connected by a groove 40 in the lower partition plate 32. The groove 40 extends generally around a central mount axis 42. The shape, length, and size of the groove 40, together with the physical characteristics of the inlet and outlet openings 36, 38 of the first orifice track 22 are selected to provide a desired stiffness and damping characteristic of the mount 10.

The upper plate 30 further defines the second orifice track 24. In the embodiment shown in FIG. 1, the second orifice track 24 extends vertically along the mount axis 42. The second orifice track includes an inlet 44 opening into the primary fluid chamber 14, and an outlet 46 opening into the secondary fluid chamber 18, connected by a bore 48 in the upper partition plate 30.

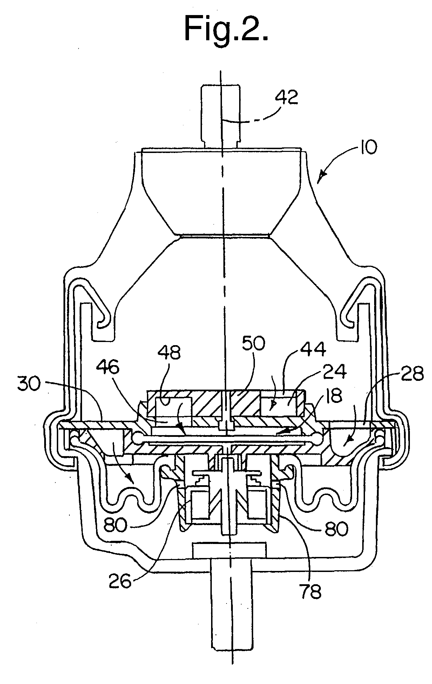

FIG. 2 shows a second embodiment of a mount 10, according to our invention, having a second orifice track 24 of a different shape than the second orifice track 24 shown in FIG. 1. The second orifice track 24 of FIG. 2 includes an inlet 44 opening in to the primary fluid chamber 14, and an outlet 46 opening into the secondary fluid chamber 18, connected by a groove 48 in a third partition plate 50 attached to the upper partition plate 30. The groove 48, in the embodiment of FIG. 2, extends generally around the central mount axis 42.

The shape, length, and size of the bore or groove 48, together with the physical characteristics of the inlet and outlet 44, 46 of the second orifice track 24, in either the embodiment of FIG. 1 or FIG. 2, are judiciously selected to provide a particular operating characteristic of the mount 10.

The partition 28 further defines a pressure regulating chamber 52 separated from the secondary fluid chamber 18 by the first diaphragm 20, and a pressure regulating orifice 54 passing through the lower plate 32 of the partition 28 into the pressure regulating chamber 52. The pressure regulating chamber 52 is separated from the secondary fluid chamber 18 by the diaphragm 20 and is partially bounded by the outer surface 56 of the diaphragm 20.

The mount 10 includes a cup-shaped base plate 58 attached to the partition 28, and having a lower mount attachment stud 60 extending from the base plate along the axis mount 42. The mount 10 also includes an upper mounting stud 62 extending along the mount axis 42 from the upper end of the mount 10. The upper mounting stud 62 extends from a base 63 attached to the partition 28 by a flexible element 64 made from natural rubber or a similar material.

The actuator 26 includes a movable valve poppet 66 for regulating fluid flow through the pressure regulating orifice 54. The poppet 66 in the exemplary embodiments takes the form of a stopper 66 of resilient material that deforms slightly when forced against the lower partition plate 32 around the pressure regulating orifice 54, to close off and seal the pressure regulating orifice 54.

The resilient stopper 66 is attached to the end of a movable armature 68 of a solenoid 70. The solenoid 70 also includes an electro- magnetic coil 72 that generates an electro-magnetic field acting on the armature 68 of the solenoid 70, when the coil 72 is connected to a source of electrical current, to generate a corresponding force on the armature 68 for moving the resilient stopper 66 in and out of engagement with the lower plate 32 of the partition 28.

A return spring 74, in the form or a helical compression spring, a wavy washer, or a Bellville washer, between the armature 68 and the coil 72 provides a return force for moving the armature 68 into contact with the lower plate 32 when the solenoid 70 is not energized. In the embodiment of our invention shown in FIG. 1, the actuator 26 is mounted in a cup-shaped actuator mount 76 attached to the base-plate 58 of the mount 10. In the embodiment of the mount 10 shown in FIG. 2, the actuator 26 is mounted in an actuator mount 78 attached to the partition 28. The actuator mount 78 includes one or more openings 80 extending through the actuator mount 78 to allow air inside the base-plate 58 to flow through the openings 80 to enter or be exhausted from the pressure regulating chamber 18 through the pressure regulating orifice 54.

When the mount 10 is operating in a vibration isolating mode, the actuator 26 is energized to pull the armature 68 and poppet 66 away from the partition 28, to thereby open the pressure regulating orifice 54. With the pressure regulating orifice 54 open, the pressure regulating chamber 52 is exposed to and operates at atmospheric air pressure. The diaphragm 20 can move freely to accommodate fluid flow through the second track 22, and in and out of the secondary fluid chamber 18.

When it is desired to increase the stiffness of the mount 10 to provide significant damping, the actuator 26 is de-energized. The return spring 74 urges the armature 68 and poppet 66 into contact with the partition 28, to thereby block the pressure regulating orifice 54 and create a trapped pocket of air in the pressure regulating chamber 52. For fluid to flow through the second orifice track 24, while the pressure regulating orifice 54 is blocked, the air trapped in the pressure regulating chamber 52 must be compressed. This need to compress the trapped air causes fluid to flow through the orifice track 40. As a result, the mount generates damping and higher dynamic stiffness at a lower frequency of interest.

Those skilled in the art will recognize that the actuator 26 can be energized at any time or frequency, to change the performance of the mount 10. Because actuation of the secondary orifice track 24 is done actively, rather than passively as in prior passive rate dip mounts, a mount 10 according to our invention offers greater flexibility of operation.

It will also be recognized, that although the embodiments disclosed herein use a simple two-state operation of the actuator 26 to completely open, or alternatively to completely close the pressure regulating orifice 54, in other embodiments of our invention it may be desirable to utilize the actuator 26 and poppet 66 for modulating flow through the pressure regulating orifice 54, to thereby provide continuously variable control of the mount characteristics. We contemplate that in other embodiments of our invention, it may be desirable to control the actuator 26 with a technique such as pulse width modulation, or to configure the poppet 66 and actuator 26 to modulate flow through a partially open pressure regulating orifice 54.

While the embodiments of the invention disclosed herein are presently considered to be preferred, various changes and modifications can be made without departing from the spirit and scope of the invention.

For example, although the exemplary embodiments expressly disclosed herein utilize an electrically activated actuator 26, other types of actuators using power sources such as fluid pressure, vacuum, or mechanical force may also be used in practicing our invention. The movable wall 20 may also take many forms other than the flexible diaphragm disclosed herein, such as a piston or a bellows.

The various elements and aspects of the invention may also be used independently from one another, or in different combinations or orientations than are described above and in the drawing with regard to the exemplary embodiment. The first and second attachment devices 60, 62 may take many other forms, and can be oriented at an angle to one another and/or the mount axis 42 to facilitate use of the invention in a wide range of applications. The invention may be practiced in mounts providing resilient support of a wide variety of masses, in addition to the automotive engine mounts described herein.

The scope of the invention is indicated in the appended claims. All changes or modifications within the meaning and range of equivalents are embraced by the claims.

## Claims

1. A hydraulic mount 10 comprising:
a resilient hollow body 12 defining a primary fluid chamber 14 and a secondary fluid chamber 16 separated by a partition 28 and connected in fluid communication by an orifice track 24 passing through the partition 28 , the secondary fluid chamber 18 including a movable wall 20 thereof having an inner and an outer surface 56 with the inner surface in fluid communication with the secondary fluid chamber 18 ; and
an actuator 26 for regulating pressure acting against the outer surface 56 of the movable wall 18.

2. The hydraulic mount 10 of claim 1 wherein the actuator 26 regulates a fluid pressure acting against the outer surface 56 of the movable wall 20.

3. The hydraulic mount 10 of claim 2 wherein the fluid pressure is air pressure.

4. The hydraulic mount 10 of claim 2 wherein:
the partition 28 further includes a pressure regulating chamber 52 separated from the secondary fluid chamber 18 by the movable wall 20 and having a pressure regulating orifice 54 passing through the partition 28 into the pressure regulating chamber 52, the pressure regulating chamber 52 being separated from the secondary fluid chamber 18 by the movable wall 20 and partially bounded by the outer surface 56 of the movable wall 20; and
the actuator 26 regulates fluid flow through the pressure regulating orifice 54.

5. The hydraulic mount 10 of claim 4 wherein the actuator 26 further includes a movable valve poppet 66 for regulating fluid flow through the pressure regulating orifice 54.

6. The hydraulic mount 10 of claim 5 wherein the actuator 26 further includes a poppet positioning element 68 for position of the poppet with respect to the pressure regulating orifice 54.

7. The hydraulic mount 10 of claim 6 wherein the poppet positioning element 68 includes an electrically activated solenoid 70.

8. The hydraulic mount 10 of claim 6 wherein the poppet positioning element 68 includesa vacuum activated solenoid 70.

9. The hydraulic mount 10 of claim 6 wherein:
the mount 10 further includes a second movable wall 34 defining a fluid reservoir 16 separated from the primary 14 , secondary 18, and pressure regulating 52 fluid chambers by the partition 28;
the partition 28 further includes a first orifice track 22 providing fluid communication between the primary fluid chamber 14 and the reservoir 16; and
the orifice track 24 between the primary fluid chamber 14 and the secondary fluid chamber 18 forms a second orifice track 24.

10. A hydraulic mount 10 comprising:
a resilient hollow body 12 defining a primary fluid chamber 14, a reservoir 16, a secondary chamber 18 having a movable wall 20, a first orifice track 22 providing fluid communication between the primary chamber 14 and the reservoir 16, and a second orifice track 24 providing fluid communication between the primary chamber 14 and the secondary chamber 18; and
an actuator 26 for regulating pressure acting against the movable wall 20 from outside of the secondary chamber 18.

11. The hydraulic mount 10 of claim 10 wherein:
the resilient hollow body 12 further defines a pressure regulating chamber 52 separated from the secondary fluid camber 18 by the movable wall 20; and
the actuator 26 regulates a fluid pressure in the pressure regulating chamber 52.

12. The hydraulic mount 10 of claim 11 wherein the fluid pressure in the pressure regulating chamber 52 is generated by pressurized air.

13. The hydraulic mount 10 of claim 11 wherein the fluid pressure in the pressure regulating chamber 52 is generated by a vacuum.

14. The hydraulic mount 10 of claim 11 wherein:
the resilient hollow body 12 further defines a pressure regulating orifice 54 opening into the pressure regulating chamber 52; and
the actuator 26 regulates fluid flow through the pressure regulating orifice 54.

15. The hydraulic mount 10 of claim 14 wherein the actuator 26 further includes a movable valve poppet 66 for regulating fluid flow through the pressure regulating orifice 54.

16. The hydraulic mount 10 of claim 15 wherein the actuator 26 further includes a poppet positioning element 68 for position of the poppet 66 with respect to the pressure regulating orifice 54.

17. The hydraulic mount 10 of claim 16 wherein the poppet positioning element 68 includes an electrically activated solenoid 70.

18. The hydraulic mount 10 of claim 16 wherein the poppet positioning element 68 includes a vacuum operated solenoid 70.

19. A method for operating a hydraulic mount 10 having a resilient hollow body 12 defining a primary fluid chamber 14, a reservoir 16, a secondary chamber 18 having a movable wall 20, a first orifice track 22 providing fluid communication between the primary chamber 14 and the reservoir 16, and a second orifice track 24 providing fluid communication between the primary chamber 14 and the secondary chamber 18, the method comprising:
regulating pressure acting against the movable wall 20from outside of the secondary chamber 18.

20. The method of claim 10 wherein the resilient hollow body 12 further defines a pressure regulating chamber 52 separated from the secondary fluid chamber 18 by the movable wall 28 for containing a fluid within the pressure regulating chamber 52, and the method further comprises
regulating the pressure of a fluid contained in the pressure regulating chamber 52.
